# EUROPEAN PATENT SPECIFICATION

(11) **EP 4 199 231 B1**
(45) Date of publication and mention of the grant of the patent: **03.09.2025**
(21) Application number: 22811504.4
(22) Date of filing: 28.04.2022
(51) Int. Cl.: H01M 50/204, H01M 50/35, H01M 50/383, H01M 50/30

(54) **BATTERY PACK WITH STRUCTURE FOR REDUCING THE TEMPERATURE OF VENTING GAS AND PREVENTING THE EMISSION OF SPARK**
BATTERIEPACK MIT STRUKTUR ZUR VERRINGERUNG DER ENTLÜFTUNGSGASTEMPERATUR UND BLOCKIERUNG DER EXTERNEN FUNKENEMISSION
BLOC-BATTERIE AVEC STRUCTURE PERMETTANT DE RÉDUIRE LA TEMPÉRATURE DU GAZ DE DÉGAGEMENT ET EMPÊCHANT L'ÉMISSION D'ÉTINCELLES

(30) Priority: 26.05.2021 KR 20210067883
(43) Date of publication of application: 21.06.2023
(73) Proprietor: LG Energy Solution, Ltd., Seoul 07335 (KR)
(72) Inventor: YOON, Doo-Han, Daejeon 34122 (KR); AHN, Moon-Youl, Daejeon 34122 (KR); LEE, Jin-Kyu, Daejeon 34122 (KR)
(74) Representative: Goddar, Heinz J.
(86) International application number: PCT/KR2022/006098
(87) International publication number: WO 2022/250311

(56) References cited:
- WO-A1-2020/153017
- CN-A- 112 310 552
- CN-U- 210 956 922
- JP-A- 2009 212 005
- JP-B2- 6 296 362
- US-A1- 2019 181 399

## Description

### TECHNICAL FIELD

The present disclosure relates to a battery pack, and more particularly, to a battery pack with safety means to prevent a fire from occurring in surrounding structures of the battery pack or another battery pack due to the emission of unfiltered high temperature venting gas and spark (particles) from the battery pack in the event of thermal runaway of a battery module.

The present application claims the benefit of Korean Patent Application No. 10-2021-0067883 filed on May 26, 2021 with the Korean Intellectual Property Office.

### BACKGROUND ART

Recently, there has been a rapid increase in the demand for portable electronic products such as laptop computers, video cameras and mobile phones, and with the widespread use of robots and electric vehicles, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like. In particular, lithium secondary batteries have little or no memory effect, and thus they are gaining more attention than nickel-based secondary batteries for their advantages that recharging can be done whenever it is convenient, the self-discharge rate is very low and the energy density is high.

An individual secondary battery may be used, but in many cases, a plurality of secondary batteries electrically connected in series and/or in parallel may be used. In particular, the electrically connected secondary batteries may form a battery module when received in a module case. Additionally, the battery module may be individually used, or at least two battery modules may be electrically connected in series and/or in parallel to form a device of higher level such as a battery pack.

As electricity shortage or eco-friendly energy issues arise in recent years, much attention is directed to Energy Storage Systems (ESSs) for storing power after the power is produced. Typically, using the energy storage systems, it is easy to build smart grid systems, which makes it possible to easily control the power supply in specific regions or cities.

Battery packs used in energy storage systems may need much higher capacity than medium and small-sized battery packs. Accordingly, in general, the battery pack include a plurality of battery modules. Additionally, to increase the energy density, in many cases, the plurality of battery modules is densely arranged in a very narrow space.

However, when the plurality of battery modules is densely arranged in the narrow space, they may be vulnerable to fires. For example, when thermal runaway occurs in any one battery module, high temperature gas may be vented from at least one battery cell. Furthermore, when the gas is vented, high temperature spark may be vented, and the spark may include active materials separated from the electrode in the battery cell or molten aluminum particles. When the high temperature spark and the high temperature gas meets oxygen, a fire may occur in the battery pack.

In particular, when the fire occurs in the specific battery cell or module, the fire may spread to the neighboring battery cell or battery module or another battery pack. In particular, since the energy storage system includes the plurality of batteries densely arranged in the narrow space, when the fire occurs, it is not easy to stop the fire. Furthermore, when considering the scale or role of the energy storage system, the fire in the battery pack may cause very grave economical damage and loss of human life. Therefore, it is necessary to prevent the fire propagation in the event of thermal runaway. CN 112 310 552 A discloses a battery pack according to the preamble of claim 1.

### DISCLOSURE

### Technical Problem

The present disclosure is designed to solve the above-described problem, and therefore the present disclosure is directed to providing a battery pack configured to prevent a fire from occurring in surrounding structures of the battery pack or another battery pack when high temperature gas or spark is generated from any battery module due to thermal runaway and an energy storage system comprising the same.

The technical problem of the present disclosure to be solved is not limited to the above-described problem, and these and other problems will be clearly understood by those skilled in the art from the following detailed description.

### Technical Solution

To achieve the above-described objective, a battery pack according to claim 1 is provided.

The mesh may include an entrance mesh and an exit mesh to cover the entrance and the exit of the temperature reducing tunnel, respectively.

The temperature reducing tunnel may include a plurality of gas movement passages extended in a lattice structure between the entrance mesh and the exit mesh.

Each hole of the entrance mesh or the exit mesh may be smaller than a cross-sectional size of each gas movement passage.

Each gas movement passage may include a plurality of partitions, the plurality of partitions may include upper partitions extending obliquely from a ceiling surface of the gas movement passage and spaced apart from each other, and lower partitions alternately disposed with the upper partitions and extending obliquely from a bottom surface of the gas movement passage.

The anti-fire venting unit may be detachably attached to a case hole in a wall of the pack case, the case hole forming an exit of the gas venting path.

The anti-fire venting unit may be provided plurally and the plurality of anti-fire venting units may be arranged at a predetermined interval along the gas venting path inside the pack case.

The anti-fire venting unit may be disposed on the gas venting path corresponding to between any one battery module and its neighboring battery module.

The anti-fire venting unit further includes an outer frame with a hollow structure whereby the temperature reducing tunnel is interference fit therein.

The outer frame may have two openings, each one opening on each of a side and an opposite side, and the mesh may be integrally fixed and coupled to one of the two openings, and rotatably coupled to the other opening.

The outer frame may be fixed and coupled to an inside of the pack case.

The at least one battery module may include two or more battery modules arranged consecutively, and the battery pack may further include a heat transfer suppression unit between the neighboring battery modules to suppress heat transfer between the battery modules.

The heat transfer suppression unit may include a first thermal insulation pad, a first thermally conductive sheet made of a metal, a second thermal insulation pad, a second thermally conductive sheet made of a metal and a third thermal insulation pad, stacked in a direction in that order, and the first thermally conductive sheet and the second thermally conductive sheet may be in surface contact with an upper surface of the pack case.

According to another aspect of the present disclosure, there is provided an energy storage system including the battery pack.

### Advantageous Effects

According to the present disclosure, when high temperature venting gas and spark occurs due to thermal runaway of the battery module, it is possible to prevent fires from occurring in the external structures near the battery pack or another battery pack.

Specifically, according to the configuration of the anti-fire venting unit according to the present disclosure, venting gas may be allowed to flow out of the pack case after its temperature is reduced, and high temperature spark may be filtered to prevent it from coming out of the battery pack. Accordingly, it is possible to prevent fires from occurring in the surrounding structures of the battery pack or another battery pack.

The present disclosure may have any other effects, and these and other effects will be described in each embodiment or a description of the effects that can be easily inferred by those skilled in the art is omitted.

### DESCRIPTION OF DRAWINGS

FIG. 1 is a diagram schematically showing the main parts of a battery pack according to an embodiment of the present disclosure.
FIG. 2 is an exploded perspective view of an anti-fire venting unit of FIG. 1.
FIG. 3 is a cross-sectional view of an anti-fire venting unit of FIG. 1.
FIG. 4 is a diagram showing a variation of the anti-fire venting unit of FIG. 3.
FIG. 5 is a diagram schematically showing the main parts of a battery pack according to another embodiment of the present disclosure.
FIG. 6 is a diagram showing battery modules and a heat transfer suppression unit of FIG. 5.
FIG. 7 is a diagram showing the heat insulation and heat dissipation structure between battery modules of a battery pack according to another embodiment of the present disclosure.
FIG. 8 is a perspective view showing an anti-fire venting unit of FIG. 5.
FIG. 9 is an exploded perspective view of the anti-fire venting unit of FIG. 8.
FIG. 10 is a diagram showing a variation of the anti-fire venting unit of FIG. 9.
FIG. 11 is a diagram schematically showing the main parts of a battery pack according to still another embodiment of the present disclosure.

### BEST MODE

Hereinafter, the exemplary embodiment of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just an exemplary embodiment of the present disclosure, but not intended to fully describe the technical aspects of the present disclosure, so it should be understood that a variety of other equivalents and modifications could have been made thereto at the time that the application was filed.

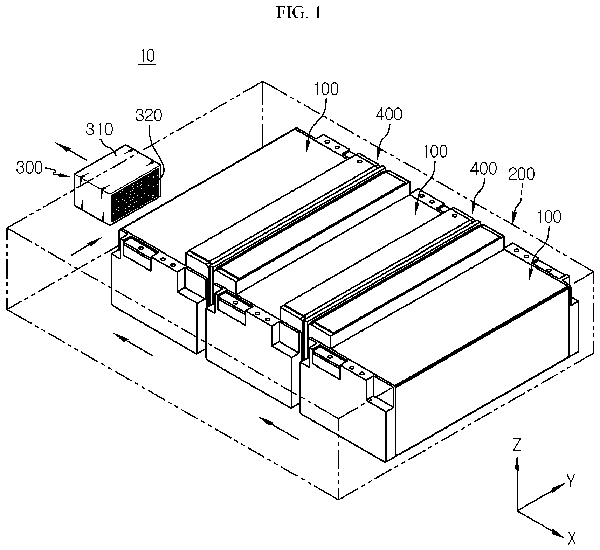

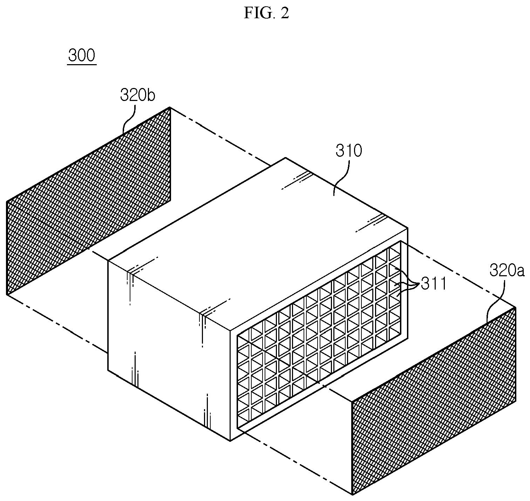

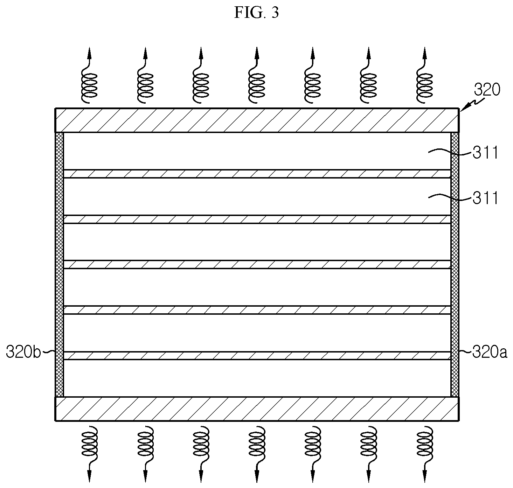

FIG. 1 is a diagram schematically showing the main parts of a battery pack according to an embodiment of the present disclosure, FIG. 2 is an exploded perspective view of an anti-fire venting unit of FIG. 1, and FIG. 3 is a cross-sectional view of the anti-fire venting unit of FIG. 1.

Referring to FIGS. 1 to 3, the battery pack 10 according to an embodiment of the present disclosure includes a battery module 100, a pack case 200 and the anti-fire venting unit 300.

The battery module 100 may include at least one secondary battery 110 to store and supply energy. Additionally, the battery pack 10 may include at least one battery module 100. In particular, to improve the capacity and/or output of the battery pack 10, the battery pack 10 may include a plurality of battery modules 100 as shown in FIG. 1. In this instance, the plurality of battery modules 100 may be arranged in at least one direction.

Although not shown, in addition to the secondary batteries 110, the battery module 100 may include components for electrically connecting the secondary batteries 110, components for sensing voltage and temperature, a circuit board, a connector and a module housing accommodating them.

The secondary battery 110 may be a pouch-type secondary battery 110 including an electrode assembly, an electrolyte solution and a pouch-type case.

For example, the plurality of pouch-type secondary batteries 110 may be stacked in the horizontal direction (X axis direction) upright in the vertical direction (Z axis direction) to form a cell stack, which is received in the module housing. In this instance, electrode leads of each pouch-type secondary battery 110 may directly contact each other or may be electrically connected through a busbar.

The secondary battery 110 may include any other type of secondary battery than the pouch-type, for example, a cylindrical or prismatic secondary battery including a battery case of a metal can.

The module housing may be configured to receive at least one secondary battery 110 in the internal space.

For example, the module housing may include a rectangular pipe-shaped housing frame including an upper plate, a lower plate and two side plates. Some plates included in the housing frame, for example, the lower plate and the two side plates may be integrated into one. In this case, the integrated shape of the lower plate and the two side plates may be an approximately U shape.

The cell stack is housed in the limited internal space of the housing frame, and the secondary battery 110 cells are electrically connected to each other. In this instance, all the secondary battery 110 cells may be connected in series or in parallel by welding the electrode leads of the neighboring secondary battery 110 cells to one busbar. Here, the busbar refers to a metal bar-shaped conductor.

A front cover and a rear cover may be mounted in the welded part of the electrode leads of the secondary battery 110 cells and the busbar, i.e., on the front side and the rear side of the housing frame, respectively. The front cover and the rear cover may be made of an insulation material, for example, a plastic material to prevent a short circuit from occurring in the electrically connected part. Additionally, the front cover or the rear cover may be used as an installation location of an external terminal of the module and a connector.

The pack case 200 is the component used to receive the plurality of battery modules 100 and may be formed with a hermetic structure using a material having high mechanical strength to protect the plurality of battery modules 100 from external physical and chemical factors. Although FIG. 1 schematically shows the pack case 200 of a box shape with approximately rectangular prism for simplicity of illustration, the pack case 200 may include a plate-shaped upper cover 210 that forms a top surface and a plate-shaped lower cover 220 that forms a bottom surface and walls, and the upper cover 210 and the lower cover 220 may be coupled and sealed by bolting, hooking, sealing and adhesion.

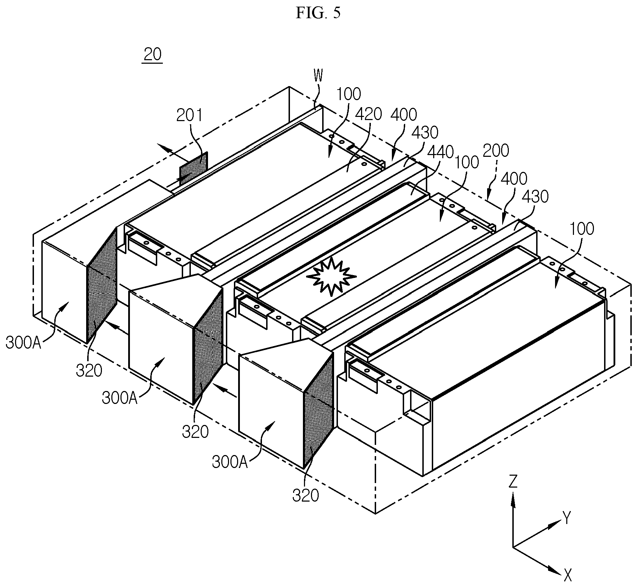

Additionally, the pack case 200 has a case hole 201 (see FIG. 5). The case hole 201 may be on one side of the pack case 200, for example, in the wall of the lower cover 220. The case hole 201 may be open at an area of the wall to allow air to pass through the pack case 200 so the air may move in and out of the pack case 200.

The case hole 201 may prevent the deformation of the pack case 200 by removing a pressure difference between the inside and outside of the battery pack 10, and may act as a gas outlet through which venting gas exits the battery pack 10 when the venting gas occurs in any battery module 100 within the battery pack 10. The case hole 201 may be an exit of a gas venting path, i.e., an end of the gas venting path for guiding the release of the venting gas occurred in the battery module 100 from the pack case 200.

The anti-fire venting unit 300 is a structure that does not allow flames, sparks and impurities to pass through and allows venting gas to pass through to reduce the temperature of the venting gas. The anti-fire venting unit 300 of this embodiment may be detachably attached to the case hole 201. For example, the anti-fire venting unit 300 may cover the case hole 201 and may be attached to the outer wall of the pack case 200. Although not shown, bolts and sealing agents may be used to ensure adequate fixing and sealability between the anti-fire venting unit 300 and the pack case 200.

Specifically, as shown in FIGS. 2 and 3, the anti-fire venting unit 300 includes a temperature reducing tunnel 310 made of a metal having pores and two meshes 320.

The temperature reducing tunnel 310 may include a plurality of gas movement passages 311 made of a metal having high thermal conductivity and high strength such as, for example, aluminum, and the gas movement passages 311 may be extended in a lattice structure. Additionally, the meshes 320 may cover the entrance and exit of the temperature reducing tunnel 310.

While high temperature venting gas passes through the temperature reducing tunnel 310, heat is absorbed by the body of the temperature reducing tunnel 310, so the temperature becomes lower. In particular, the porous structure of the temperature reducing tunnel 310 made of the metal increases the contact area between the venting gas and the temperature reducing tunnel 310, resulting in the increased amount of thermal radiation of the venting gas.

Additionally, when the venting gas passes through the plurality of narrow gas movement passages 311 of this embodiment, the venting gas increases in pressure and speed. The convective heat transfer coefficient is proportional to the air flow rate. Accordingly, as the energy loss of the venting gas increases with the increasing pressure and the convective heat transfer rate increases with the increasing flow rate, a temperature difference of the venting gas before and after the venting gas passes through the temperature reducing tunnel 310 significantly increases. Accordingly, in the event of high temperature venting gas in the battery pack 10, when the venting gas exits the battery pack 10 through the temperature reducing tunnel 310, the temperature becomes lower, so the venting gas does not act as the factor that causes a fire to the structure outside of the battery pack 10 or the other battery pack 10. Additionally, flames may be restrained from moving or extinguished due to trapping in the plurality of narrow gas movement passages 311 of the temperature reducing tunnel 310.

In a variation, each gas movement passage 311 of the temperature reducing tunnel 310 may further include a plurality of partitions 312,313 to promote a turbulent flow in each gas movement passage 311.

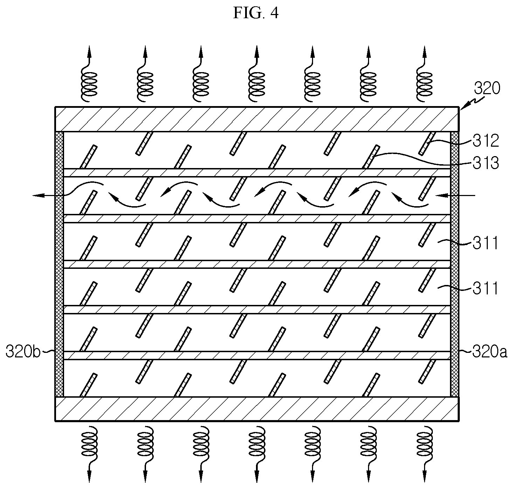

For example, as shown in FIG. 4, the plurality of partitions may include upper partitions 312 and lower partitions 313, the upper partitions 312 may be spaced apart from each other, each upper partition 312 may extend obliquely from the ceiling surface of the gas movement passage 311, and the lower partitions 313 may be alternately disposed with the upper partitions 312 and each extend obliquely from the bottom surface of the gas movement passage 311.

According to the internal structure of the gas movement passages 311, although FIG. 4 shows the flow of venting gas in only one gas movement passage 311 for simplicity of illustration, the turbulent flow is remarkably generated while the venting gas passes through the narrow gas movement passages 311. Accordingly, the loss of heat from the venting gas to the temperature reducing tunnel 310, i.e., the convective heat transfer rate further increases. Accordingly, the temperature reducing tunnel 310 according to this variation may be more advantageous in reducing the temperature of the venting gas.

The meshes 320 are the component used to block high temperature spark that may move with the venting gas, and include the entrance mesh 320a and the exit mesh 320b to cover the entrance and exit of the temperature reducing tunnel 310, respectively. Here, the spark refers to active materials separated from the electrode in the secondary battery 110 or molten aluminum particles. When the venting gas is released into the atmosphere, the emission of unfiltered high temperature spark from the battery pack 10 significantly increases the risk of fires in the surrounding structures of the battery pack 10 or the other battery pack 10.

Some of the conventional battery packs 10 use meshes to prevent the ingress of impurities or the emission of sparks. However, in many cases, the meshes are damaged, for example, distorted or torn open, due to the pressure of the venting gas when vented. The present disclosure couples the meshes 320 to the entrance and exit of the temperature reducing tunnel 310 to prevent the meshes 320 from being damaged by the strong pressure of the venting gas when vented.

For example, as the meshes 320 are coupled to the entrance and exit of the temperature reducing tunnel 310 as shown in FIGS. 2 and 3, the entire area of the meshes 320 may be supported by the temperature reducing tunnel 310 which is a metal structure, thereby avoiding distortion or perforation under the pressure of the venting gas.

Each hole in the mesh of the entrance mesh 320a and the exit mesh 320b may be much smaller than the cross-sectional size (air hole size) of the gas movement passages 311 of the temperature reducing tunnel 310. Accordingly, ordinary spark particles, not in ultrasmall size, are not allowed to pass through the entrance mesh 320a or the exit mesh 320b. The meshes 320 may be made of a metal or a fire resistant material (for example, mica) that does not easily melt in heat when exposed to high temperature by the contact with the high temperature spark.

Accordingly, according to the anti-fire venting unit 300 of this embodiment as described above, it is possible to allow venting gas out after reducing the temperature while preventing the emission of high temperature spark in the event of high temperature venting gas in the battery pack 10, thereby preventing fires in the surrounding structures of the battery pack 10 or the other battery pack 10.

Subsequently, a battery pack 20 according to another embodiment of the present disclosure will be described with reference to FIGS. 5 to 10.

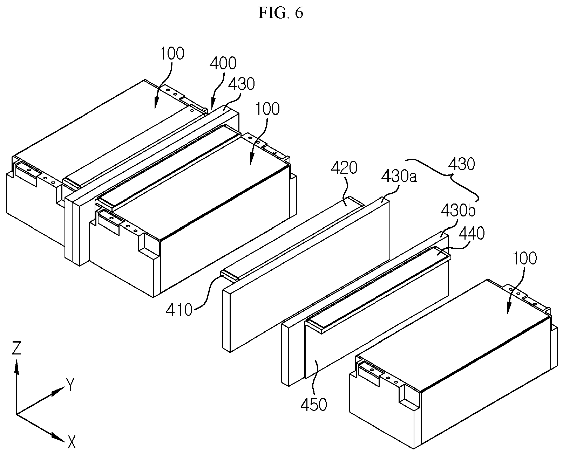

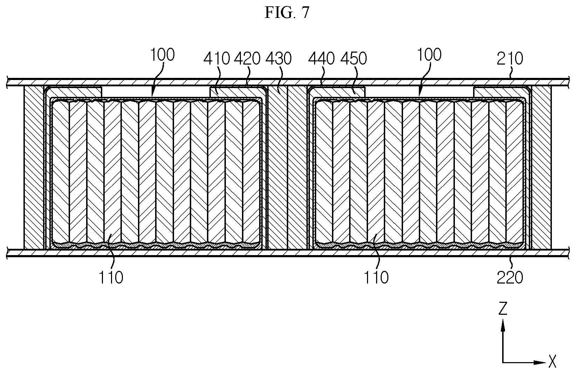

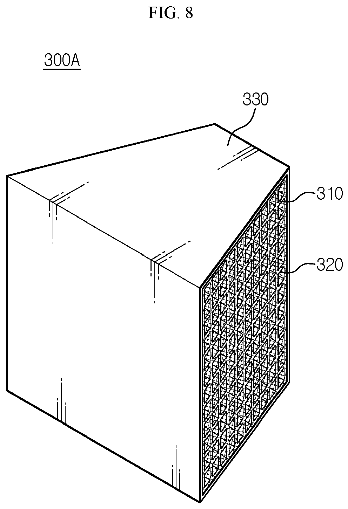

FIG. 5 is a diagram schematically showing the main parts of the battery pack 20 according to another embodiment of the present disclosure, FIG. 6 is a diagram showing battery modules 100 and a heat transfer suppression unit 400 of FIG. 5, FIG. 7 is a diagram showing the heat insulation and heat dissipation structure between the battery modules 100 of the battery pack 20 according to another embodiment of the present disclosure, and FIG. 8 is a perspective view showing an anti-fire venting unit 300A of FIG. 5.

The same reference numeral as the previous embodiment indicates the same element. To avoid redundancy, the overlapping description of the same element is omitted and the following description is made based on difference(s) between this embodiment and the previous embodiment.

The battery pack 20 according to another embodiment of the present disclosure includes a plurality of anti-fire venting units 300A arranged at a predetermined interval along the gas venting path inside the pack case 200, and further includes the heat transfer suppression unit 400 to suppress the movement of heat between the battery modules 100.

Describing the heat transfer suppression unit 400, the heat transfer suppression unit 400 is the component used to prevent the spread of heat to the adjacent battery module 100 in the event of thermal runaway of any one battery module 100, and may include a first thermal insulation pad 410, a first thermally conductive sheet 420, a second thermal insulation pad 430, a second thermally conductive sheet 440 and a third thermal insulation pad 450, stacked in a direction (X axis direction) in that order. As shown in FIGS. 5 and 6, the plurality of battery modules 100 may be continuously arranged side by side in the X axis direction, and each one heat transfer suppression unit 400 may be positioned between the two adjacent battery modules 100.

Each of the first thermal insulation pad 410, the second thermal insulation pad 430 and the third thermal insulation pad 450 may be a foam with a porous structure, a pad made of ceramic fibers or a film, and may come in various sizes and shapes as necessary. This embodiment shows the second thermal insulation pad 430 divided into two unit second thermal insulation pads 430a, 430b, but this is provided for illustration purposes, and one second thermal insulation pad 430 or three or more second thermal insulation pads 430 may be contemplated.

Additionally, each of the first thermally conductive sheet 420 and the second thermally conductive sheet 440 may be a thin film made of a material having high thermal conductivity such as, for example, aluminum or graphite.

Specifically, as shown in FIG. 7, the first thermal insulation pad 410 may be configured to cover the side of the left battery module 100 and part of the upper surface, the first thermally conductive sheet 420 may have the upper end bent to conform the first thermal insulation pad 410, and the upper end surface of the first thermally conductive sheet 420 may be configured to contact the upper cover 210 of the pack case 200, i.e., the upper surface of the pack case 200.

Additionally, the third thermal insulation pad 450 and the second thermally conductive sheet 440 may be symmetric to the first thermal insulation pad 410 and the first thermally conductive sheet 420 with respect to the second thermal insulation pad 430, respectively, and may be configured to cover the side of the right battery module 100 and part of the upper surface.

According to the above-described configuration, in the event of thermal runaway of the left battery module 100 shown in FIG. 7, heat from the left battery module 100 is transferred to the right battery module 100 through five stages (primary heat insulation > primary thermal dispersion > secondary heat insulation > secondary thermal dispersion > tertiary heat insulation). That is, the heat is blocked by the first thermal insulation pad 410, and the heat transferred from the first thermal insulation pad 410 is conducted to the pack case 200 through the first thermally conductive sheet 420. That is, the heat from the first thermally conductive sheet 420 is transferred to the pack case 200 having much higher thermal capacity. Additionally, the heat from the first thermally conductive sheet 420 is blocked by the second thermal insulation pad 430, and the heat transferred from the second thermal insulation pad 430 is transferred to the pack case 200 through the second thermally conductive sheet 440 and blocked by the third thermal insulation pad 450. Accordingly, as most of the heat is blocked or released into the atmosphere through the five stages, the amount of heat transferred from the left battery module 100 to the right battery module 100 is very small.

Additionally, the battery pack 10 according to another embodiment of the present disclosure may include the battery modules 100, each surrounded by the anti-fire venting units 300A, the heat transfer suppression unit 400 and the pack case 200, to allow venting gas to flow along the specific path in the pack case 200 in the event of the venting gas in the battery module 100.

For example, as shown in FIG. 5, the gas venting path may be designed such that the top and bottom of the second thermal insulation pad 430 contact the upper surface and the lower surface of the pack case 200, respectively, and the rear end (a narrow surface placed vertically) of the second thermal insulation pad 430 contacts the wall of one side of the pack case 200 to stop the venting gas from flowing to the top (+Z axis direction), the bottom (-Z axis direction), the two sides (±X axis direction) and the rear side (+Y axis direction) of each battery module 100 and allow the venting gas to flow to the front side (-Y axis direction), move in the -X axis direction along one edge of the pack case 200 and exit the case hole 201. In this instance, a barrier W may be added to shield the side of the outermost battery module 100 that does not contact the other battery module 100.

Additionally, the anti-fire venting units 300A according to another embodiment of the present disclosure may be arranged at the predetermined interval along the gas venting path.

Preferably, to prevent the spread of high temperature spark to the other battery module 100 in the event of venting gas and spark in any battery module 100, each anti-fire venting unit 300A may be disposed on the gas venting path corresponding to between any one battery module 100 and its adjacent battery module 100.

In this instance, one side of the anti-fire venting unit 300A may contact the front surface of the second thermal insulation pad 430 and the upper surface, the lower surface and the other side of the anti-fire venting unit 300A may contact the upper surface, the lower surface and the -Y axis direction wall of the pack case 200, respectively, or may be covered with them, to allow the venting gas to exit the case hole 201 through the anti-fire venting unit 300A in the event of the venting gas in the battery module 100.

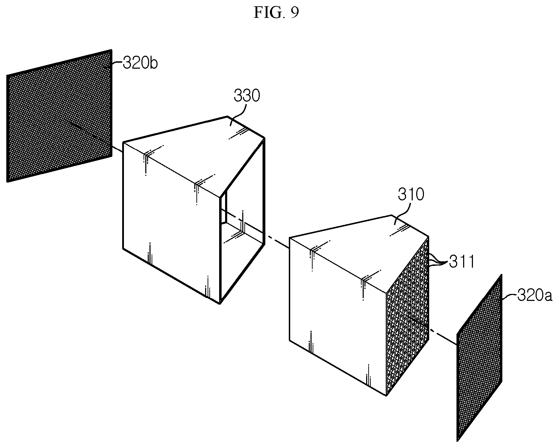

As shown in FIGS. 8 and 9, the anti-fire venting unit 300A according to another embodiment of the present disclosure may include the temperature reducing tunnel 310, the entrance mesh 320a, the exit mesh 320b and an outer frame 330.

That is, when compared with the previous embodiment, the anti-fire venting unit 300A of this embodiment further includes the outer frame 330 fixed and coupled to the inside of the pack case 200.

As shown in FIG. 9, the outer frame 330 has a hollow structure with two openings, each one opening on each of one side and the other side, and the temperature reducing tunnel 310 is interference fit in the outer frame 330 through the openings. The outer frame 330 plays a role in protecting the temperature reducing tunnel 310 from external impacts. Additionally, the anti-fire venting unit 300A may be fixed to the inside of the pack case 200 by coupling brackets (not shown) to the outer side of the outer frame or integrally forming them and connecting the bracket and the pack case 200 with bolts.

Additionally, the meshes 320 may be attached to the two openings of the outer frame 330 by any one of bolting, welding and adhesion methods.

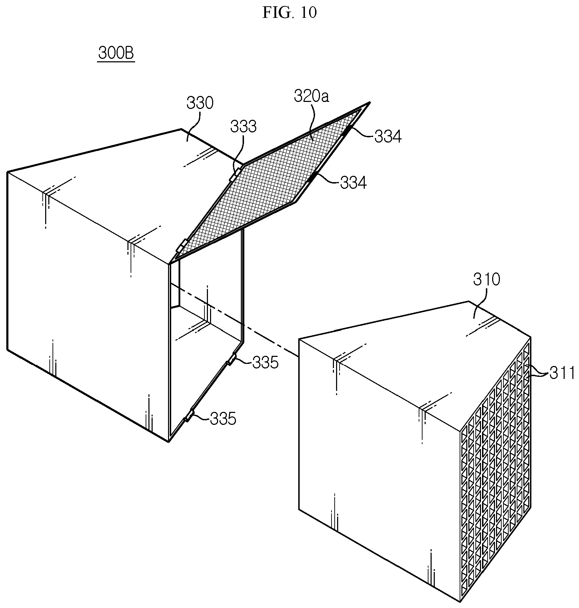

In another variation, the meshes 320 may be integrally fixed and coupled to one of the two openings of the outer frame 330 and rotatably coupled to the other opening. For example, as shown in FIG. 10, the upper end of one opening of the outer frame 330 and the upper end of the mesh 320 may be connected with hinges 333 and the mesh 320 may be lifted up to receive the temperature reducing tunnel 310 in the outer frame 330. Additionally, after the temperature reducing tunnel 310 is received in the outer frame 330, lockers 335 at the lower end of one opening of the outer frame 330 may be fit in lock holes 334 at the lower end of the mesh 320. In this case, the assembly process of the mesh 320 and the outer frame 330 is more straightforward than the process using bolting, welding and adhesion, so it is possible to perform a rework task more easily when it is necessary to replace or repair the temperature reducing tunnel 310 or the mesh 320 afterwards.

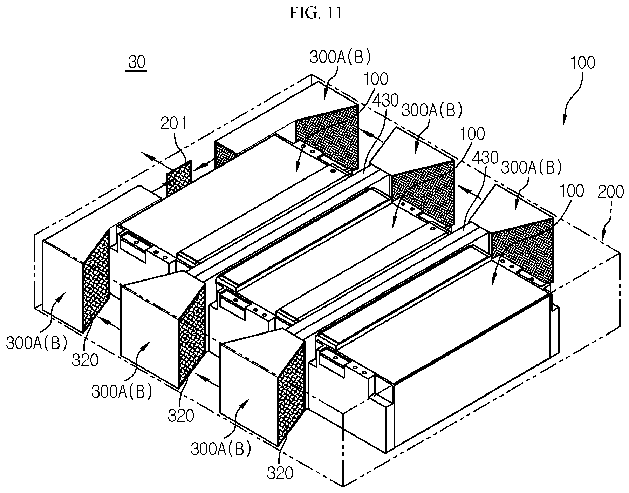

FIG. 11 is a diagram schematically showing the main parts of a battery pack 30 according to still another embodiment of the present disclosure.

When compared with the battery pack 10 of the previous embodiment, the battery pack 30 according to still another embodiment of the present disclosure includes the gas venting paths at the two side edges in the pack case 200 and the anti-fire venting units 300A in each gas venting path.

As shown in FIG. 11, in this embodiment, when venting gas occurs in the battery module 100, the venting gas is allowed to flow out from the front side (-Y axis direction) and the rear side (+Y axis direction) of the battery module 100 and move along the two side edges of the pack case 200, so the venting gas may be released into the atmosphere faster than the previous embodiment. Accordingly, the battery pack 30 according to this embodiment may be effective in suppressing the fire propagation.

An energy storage system according to the present disclosure may include at least one battery pack according to the present disclosure. In particular, the energy storage system may include a plurality of battery packs according to the present disclosure electrically connected to each other to have high energy capacity. Besides, the energy storage system according to the present disclosure may further include a variety of different components of energy storage systems known at the time the application was filed. Furthermore, the energy storage system may be used at various locations or devices, for example, smart grid systems or electrical power charging stations.

Meanwhile, the terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the appended claims.

## Claims

1. A battery pack (10, 20, 30), comprising:
at least one battery module (100);
a pack case (200) accommodating the battery module (100); and
an anti-fire venting unit (300, 300A) positioned on a gas venting path configured to guide gas generated from the battery module (100) to flow out of the pack case (200),
wherein the anti-fire venting unit (300, 300A) includes:
a temperature reducing tunnel (310); and
a mesh (320) configured to cover at least one of an entrance or an exit of the temperature reducing tunnel (310),
**characterized in that**
the temperature reducing tunnel (310) is made of metal having pores, and
the anti-fire venting unit (300, 300A) further includes an outer frame (330) with a hollow structure whereby the temperature reducing tunnel (310) is received therein.

2. The battery pack (10, 20, 30) according to claim 1, wherein the mesh (320) includes an entrance mesh (320a) and an exit mesh (320b) to cover the entrance and the exit of the temperature reducing tunnel (310), respectively.

3. The battery pack (10, 20, 30) according to claim 1, wherein the temperature reducing tunnel (310) includes a plurality of gas movement passages (311) extended in a lattice structure.

4. The battery pack (10, 20, 30) according to claim 3, wherein each hole of the mesh (320) is smaller than a cross-sectional size of each gas movement passage (311).

5. The battery pack (10, 20, 30) according to claim 3, wherein each gas movement passage (311) includes a plurality of partitions (312, 313), and
wherein the plurality of partitions (312, 313) includes upper partitions (312) extending obliquely from a ceiling surface of the gas passage and spaced apart from each other, and lower partitions (312, 313) alternately disposed with the upper partitions (312) and extending obliquely from a bottom surface of the gas passage.

6. The battery pack (10, 20, 30) according to claim 1, wherein the anti-fire venting unit (300, 300A) is detachably attached to a case hole (201) in a wall of the pack case (200), the case hole (201) forming an exit of the gas venting path.

7. The battery pack (10, 20, 30) according to claim 1, wherein the anti-fire venting unit (300, 300A) is provided plurally and the plurality of the anti-fire venting units (300A) is arranged at a predetermined interval along the gas venting path inside the pack case (200).

8. The battery pack (10, 20, 30) according to claim 7, wherein the anti-fire venting unit (300, 300A) is disposed on the gas venting path corresponding to between any one battery module (100) and its neighboring battery module (100).

9. The battery pack (10, 20, 30) according to claim 1, wherein the outer frame (330) has two openings, each one opening on each of a side and an opposite side, and
wherein the mesh (320) is integrally fixed and coupled to one of the two openings, and rotatably coupled to the other opening.

10. The battery pack (10, 20, 30) according to claim 1, wherein the outer frame (330) is fixed and coupled to an inside of the pack case (200).

11. The battery pack (10, 20, 30) according to claim 1, wherein the at least one battery module (100) includes two or more battery modules (100) arranged consecutively, and
wherein the battery pack (10, 20, 30) further comprises a heat transfer suppression unit (400) between the neighboring battery modules (100) to suppress heat transfer between the battery modules (100).

12. The battery pack (10, 20, 30) according to claim 11, wherein the heat transfer suppression unit (400) includes a first thermal insulation pad (410), a first thermally conductive sheet (420) made of a metal, a second thermal insulation pad (430, 430a, 430b), a second thermally conductive sheet (440) made of a metal and a third thermal insulation pad (450), stacked in a direction in that order, and
wherein the first thermally conductive sheet (420) and the second thermally conductive sheet (440) are in surface contact with an upper surface of the pack case (200).

13. An energy storage system comprising the battery pack (10, 20, 30) according to any one of claims 1 to 12.

## Patentansprüche

1. Batteriepack (10, 20, 30), umfassend:
mindestens ein Batteriemodul (100);
ein Packgehäuse (200), das das Batteriemodul (100) aufnimmt; und
eine Brandschutzentlüftungseinheit (300, 300A), die auf einem Gasentlüftungsweg positioniert ist, der konfiguriert ist, um von dem Batteriemodul (100) erzeugtes Gas zu leiten, um aus dem Packgehäuse (200) zu strömen,
wobei die Brandschutzentlüftungseinheit (300, 300A) Folgendes beinhaltet:
einen Temperaturreduzierungstunnel (310); und
ein Gitter (320), das konfiguriert ist, um mindestens einen von einem Eingang oder einem Ausgang des Temperaturreduzierungstunnels (310) abzudecken,
**dadurch gekennzeichnet, dass**
der Temperaturreduzierungstunnel (310) aus Metall hergestellt ist, das Poren aufweist, und
die Brandschutzentlüftungseinheit (300, 300A) ferner Folgendes beinhaltet:
einen äußeren Rahmen (330) mit einer hohlen Struktur, wodurch der Temperaturreduzierungstunnel (310) darin aufgenommen wird.

2. Batteriepack (10, 20, 30) nach Anspruch 1, bei dem das Gitter (320) ein Eingangsgitter (320a) und ein Ausgangsgitter (320b) beinhaltet, um den Eingang bzw. den Ausgang des Temperaturreduzierungstunnels (310) abzudecken.

3. Batteriepack (10, 20, 30) nach Anspruch 1, bei dem der Temperaturreduzierungstunnel (310) eine Vielzahl von Gasbewegungsdurchgängen (311) beinhaltet, die sich in einer Gitterstruktur erstrecken.

4. Batteriepack (10, 20, 30) nach Anspruch 3, bei dem jedes Loch des Gitters (320) kleiner als eine Querschnittsgröße jedes Gasbewegungsdurchgangs (311) ist.

5. Batteriepack (10, 20, 30) nach Anspruch 3, bei dem jeder Gasbewegungsdurchgang (311) eine Vielzahl von Trennwänden (312, 313) beinhaltet, und
wobei die Vielzahl von Trennwänden (312, 313) obere Trennwände (312), die sich schräg von einer Deckenfläche des Gasdurchgangs erstrecken und voneinander beabstandet sind, und untere Trennwände (312, 313), die abwechselnd mit den oberen Trennwänden (312) angeordnet sind und sich schräg von einer Bodenfläche des Gasdurchgangs erstrecken, beinhaltet.

6. Batteriepack (10, 20, 30) nach Anspruch 1, bei dem die Brandschutzentlüftungseinheit (300, 300A) abnehmbar an einem Gehäuseloch (201) in einer Wand des Packgehäuses (200) angebracht ist, wobei das Gehäuseloch (201) einen Ausgang des Gasentlüftungswegs bildet.

7. Batteriepack (10, 20, 30) nach Anspruch 1, bei dem die Brandschutzentlüftungseinheit (300, 300A) mehrfach vorgesehen ist und die Vielzahl der Brandschutzentlüftungseinheiten (300A) in einem vorbestimmten Abstand entlang des Gasentlüftungswegs innerhalb des Packgehäuses (200) angeordnet ist.

8. Batteriepack (10, 20, 30) nach Anspruch 7, bei dem die Brandschutzentlüftungseinheit (300, 300A) auf dem Gasentlüftungsweg entsprechend zwischen einem beliebigen Batteriemodul (100) und seinem benachbarten Batteriemodul (100) angeordnet ist.

9. Batteriepack (10, 20, 30) nach Anspruch 1, bei dem der äußere Rahmen (330) zwei Öffnungen aufweist, wobei sich jeweils eine Öffnung auf einer Seite und einer gegenüberliegenden Seite befindet, und
bei dem das Gitter (320) integral befestigt ist und mit einer der zwei Öffnungen gekoppelt ist und drehbar mit der anderen Öffnung gekoppelt ist.

10. Batteriepack (10, 20, 30) nach Anspruch 1, bei dem der äußere Rahmen (330) befestigt ist und mit einer Innenseite des Packgehäuses (200) gekoppelt ist.

11. Batteriepack (10, 20, 30) nach Anspruch 1, bei dem das mindestens eine Batteriemodul (100) zwei oder mehr Batteriemodule (100) beinhaltet, die nacheinander angeordnet sind, und
bei dem das Batteriepack (10, 20, 30) ferner eine Wärmeübertragungsunterdrückungseinheit (400) zwischen den benachbarten Batteriemodulen (100) umfasst, um eine Wärmeübertragung zwischen den Batteriemodulen (100) zu unterdrücken.

12. Batteriepack (10, 20, 30) nach Anspruch 11, bei dem die Wärmeübertragungsunterdrückungseinheit (400) ein erstes Wärmeisolationspad (410), eine erste wärmeleitfähige Platte (420), die aus einem Metall hergestellt ist, ein zweites Wärmeisolationspad (430, 430a, 430b), eine zweite wärmeleitfähige Platte (440), die aus einem Metall hergestellt ist, und ein drittes Wärmeisolationspad (450) beinhaltet, die in einer Richtung in dieser Reihenfolge gestapelt sind, und
bei dem die erste wärmeleitfähige Platte (420) und die zweite wärmeleitfähige Platte (440) in Oberflächenkontakt mit einer oberen Fläche des Packgehäuses (200) sind.

13. Energiespeichersystem, umfassend das Batteriepack (10, 20, 30) nach einem der Ansprüche 1 bis 12.

## Revendications

1. Bloc-batterie (10, 20, 30), comprenant :
un ou plusieurs modules de batterie (100) ;
un boîtier de bloc (200) accueillant le module de batterie (100) ; et
une unité de dégagement anti-incendie (300, 300A) positionnée sur un trajet de dégagement de gaz configuré pour guider le gaz généré par le module de batterie (100) pour le faire sortir du boîtier de bloc (200),
dans lequel l'unité de dégagement anti-incendie (300, 300A) inclut :
un tunnel de réduction de température (310) ; et
un maillage (320) configuré pour couvrir au moins soit l'entrée, soit la sortie du tunnel de réduction de température (310),
**caractérisé en ce que**
le tunnel de réduction de température (310) est constitué d'un métal ayant des pores, et
l'unité de dégagement anti-incendie (300, 300A) inclut en outre
un cadre extérieur (330) avec une structure creuse grâce à quoi le tunnel de réduction de température (310) y est reçu.

2. Bloc-batterie (10, 20, 30) selon la revendication 1, dans lequel le maillage (320) inclut un maillage d'entrée (320a) et un maillage de sortie (320b) pour couvrir l'entrée et la sortie du tunnel de réduction de température (310), respectivement.

3. Bloc-batterie (10, 20, 30) selon la revendication 1, dans lequel le tunnel de réduction de température (310) inclut une pluralité de passages de déplacement de gaz (311) étendus dans une structure en treillis.

4. Bloc-batterie (10, 20, 30) selon la revendication 3, dans lequel chaque trou du maillage (320) est plus petit qu'une dimension transversale de chaque passage de déplacement de gaz (311).

5. Bloc-batterie (10, 20, 30) selon la revendication 3, dans lequel chaque passage de déplacement de gaz (311) inclut une pluralité de cloisons (312, 313), et
dans lequel la pluralité de cloisons (312, 313) inclut des cloisons supérieures (312) s'étendant à l'oblique d'une surface de plafond du passage de gaz et espacées l'une de l'autre, et des cloisons inférieures (312, 313) disposées en alternance avec le cloisons supérieures (312) et s'étendant à l'oblique d'une surface inférieure du passage de gaz.

6. Bloc-batterie (10, 20, 30) selon la revendication 1, dans lequel l'unité de dégagement anti-incendie (300, 300A) est fixée de manière mobile à un trou de boîtier (201) dans une paroi du boîtier de bloc (200), le trou de boîtier (201) formant une sortie du trajet de dégagement de gaz.

7. Bloc-batterie (10, 20, 30) selon la revendication 1, dans lequel l'unité de dégagement anti-incendie (300, 300A) est fournie pluriellement et la pluralité des unités de dégagement anti-incendie (300A) sont disposées à un intervalle prédéterminé le long du trajet de dégagement de gaz à l'intérieur du boîtier de bloc (200).

8. Bloc-batterie (10, 20, 30) selon la revendication 7, dans lequel l'unité de dégagement anti-incendie (300, 300A) est disposée sur le trajet de dégagement de gaz correspondant à entre un module de batterie quelconque (100) et son module de batterie voisin (100).

9. Bloc-batterie (10, 20, 30) selon la revendication 1, dans lequel le cadre extérieur (330) a deux ouvertures, chaque ouverture sur un côté et un côté opposé, et
dans lequel le maillage (320) est fixé intégralement et couplé à une des deux ouvertures, et couplé en rotation à l'autre ouverture.

10. Bloc-batterie (10, 20, 30) selon la revendication 1, dans lequel le cadre extérieur (330) est fixé et couplé à une partie intérieure du boîtier de bloc (200).

11. Bloc-batterie (10, 20, 30) selon la revendication 1, dans lequel le ou les modules de batterie (100) incluent deux modules de batterie (100) ou plus agencés consécutivement, et
dans lequel le bloc-batterie (10, 20, 30) comprend en outre une unité de suppression du transfert de chaleur (400) entre les modules de batterie voisins (100) pour supprimer le transfert de chaleur entre les modules de batterie (100).

12. Bloc-batterie (10, 20, 30) selon la revendication 11, dans lequel l'unité de suppression du transfert de chaleur (400) inclut un premier tampon d'isolation thermique (410), une première feuille thermoconductrice (420) constituée d'un métal, un deuxième tampon d'isolation thermique (430, 430a, 430b), une deuxième feuille thermoconductrice (440) constituée d'un métal et un troisième tampon d'isolation thermique (450), empilés dans une direction dans cet ordre, et
dans lequel la première feuille thermoconductrice (420) et la deuxième feuille thermoconductrice (440) sont en contact de surface avec une surface supérieure du boîtier de bloc (200).

13. Système de stockage d'énergie comprenant le bloc-batterie (10, 20, 30) selon l'une quelconque des revendications 1 à 12.
